# EUROPEAN PATENT APPLICATION

(11) **EP 4 304 145 A1**
(43) Date of publication of application: **10.01.2024**
(21) Application number: 23175323.7
(22) Date of filing: 25.05.2023
(51) Int. Cl.: H04L 45/00

(54) **QUASI-STATEFUL LOAD BALANCING**

(30) Priority: 08.07.2022 US 202217860173
(71) Applicant: Nokia Solutions and Networks Oy, 02610 Espoo (FI)
(72) Inventor: DUTTA, Pranjal Kumar, Sunnyvale, CA, 94086 (US)
(74) Representative: Novagraaf Technologies

(57) **Abstract**

Various example embodiments for supporting quasi-stateful load balancing in communication networks are presented herein. Various example embodiments for supporting quasi-stateful load balancing in communication networks may be configured to reduce or minimize the amount of state information that needs to be maintained by a node for supporting load balancing across outgoing links of the node by reducing or minimizing the number of link pinning state entries that need to be maintained by a node for supporting load balancing across outgoing links of the node. Various example embodiments for supporting quasi-stateful load balancing in communication networks may be configured to reduce or minimize the number of link pinning state entries by deactivating those link pinning state entries associated with flows that remain default mapped to outgoing links and retaining only those link pinning state entries associated with flows that are remapped between outgoing links.

## Description

### TECHNICAL FIELD

Various example embodiments relate generally to communications and, more particularly but not exclusively, to supporting communications using load balancing techniques.

### BACKGROUND

In communication networks, various communications technologies may be used to support various types of communications.

### SUMMARY

In at least some example embodiments, an apparatus includes at least one processor and at least one memory including computer program code, wherein the at least one memory and the computer program code are configured to, with the at least one processor, cause the apparatus at least to create, for a set of flows mapped to an outgoing link, a respective set of link pinning state entries mapping the respective flows to the outgoing link, remap a first subset of flows in the set of flows to at least one other outgoing link while a second subset of flows in the set of flows remain mapped to the outgoing link, and retain ones of the link pinning state entries associated with respective flows in the first subset of flows and deactivate ones of the link pinning state entries associated with respective flows in the second subset of flows. In at least some example embodiments, the flows in the set of flows are mapped to the outgoing link based on stateless per-flow load balancing. In at least some example embodiments, the set of link pinning state entries is created based on detection of a bandwidth condition associated with the outgoing link. In at least some example embodiments, the bandwidth condition includes a bandwidth of the outgoing link reaching a bandwidth threshold. In at least some example embodiments, the bandwidth threshold of the outgoing link is less than a total bandwidth capacity of the outgoing link. In at least some example embodiments, the first subset of flows is remapped to the at least one other outgoing link based on detection of a bandwidth condition associated with the outgoing link. In at least some example embodiments, the bandwidth condition includes a bandwidth of the outgoing link reaching a bandwidth threshold. In at least some example embodiments, the bandwidth threshold of the outgoing link is less than a total bandwidth capacity of the outgoing link. In at least some example embodiments, to remap the first subset of flows to the at least one other outgoing link, the at least one memory and the computer program code are configured, with the at least one processor, to cause the apparatus at least to monitor, for each flow in the set of flows based on the respective link pinning state entries associated with the respective flows, a respective bandwidth consumption of the respective flow on the outgoing link, and identify the first subset of flows and the second subset of flows based on the respective bandwidth consumptions of the respective flows on the outgoing links. In at least some example embodiments, the first subset of flows includes ones of the flows in the set of flows having the highest respective bandwidth consumptions on the outgoing link. In at least some example embodiments, the first subset of flows is remapped to the at least one other outgoing link in a manner tending to evenly distribute traffic of the flows in the set of flows across a set of outgoing links that includes the outgoing link and the at least one other outgoing link. In at least some example embodiments, to remap the first subset of flows to the at least one other outgoing link, the at least one memory and the computer program code are configured, with the at least one processor, to cause the apparatus at least to modify, for each flow in the first subset of flows, the respective link pinning state entry of the respective flow from mapping the respective flow to the outgoing link to mapping the respective flow to the at least one other outgoing link. In at least some example embodiments, the ones of the link pinning state entries associated with respective flows in the first subset of flows are retained by continuing to store the ones of the link pinning state entries as long as packets continue to be forwarded on the respective flows. In at least some example embodiments, the ones of the link pinning state entries associated with respective flows in the second subset of flows are deactivated by at least one of deleting the ones of the link pinning state entries or marking the ones of the link pinning state entries for deletion. In at least some example embodiments, to retain ones of the link pinning state entries associated with respective flows in the first subset of flows, the at least one memory and the computer program code are configured to, with the at least one processor, cause the apparatus at least to retain the ones of the link pinning state entries associated with respective flows in the first subset of flows by making the ones of the link pinning state entries associated with respective flows in the first subset of flows permanent based on a determination that packets are forwarded on the respective flows in the first subset of flows. In at least some example embodiments, to deactivate ones of the link pinning state entries associated with respective flows in the second subset of flows, the at least one memory and the computer program code are configured to, with the at least one processor, cause the apparatus at least to deactivate the ones of the link pinning state entries associated with respective flows in the second subset of flows in response to the ones of the link pinning state entries associated with respective flows in the second subset of flows being updated to reflect the remapping of the respective flows in the second subset of flows from the outgoing link to the at least one other outgoing link. In at least some example embodiments, to retain ones of the link pinning state entries associated with respective flows in the first subset of flows, the at least one memory and the computer program code are configured to, with the at least one processor, cause the apparatus at least to change the ones of the link pinning state entries associated with respective flows in the first subset of flows from being temporary entries to being permanent entries. In at least some example embodiments, to deactivate ones of the link pinning state entries associated with respective flows in the second subset of flows, the at least one memory and the computer program code are configured to, with the at least one processor, cause the apparatus at least to change the ones of the link pinning state entries associated with respective flows in the second subset of flows from being temporary entries to being deactivated entries.

In at least some example embodiments, a computer readable medium stores computer program code configured to cause an apparatus to create, for a set of flows mapped to an outgoing link, a respective set of link pinning state entries mapping the respective flows to the outgoing link, remap a first subset of flows in the set of flows to at least one other outgoing link while a second subset of flows in the set of flows remain mapped to the outgoing link, and retain ones of the link pinning state entries associated with respective flows in the first subset of flows and deactivate ones of the link pinning state entries associated with respective flows in the second subset of flows. In at least some example embodiments, the flows in the set of flows are mapped to the outgoing link based on stateless per-flow load balancing. In at least some example embodiments, the set of link pinning state entries is created based on detection of a bandwidth condition associated with the outgoing link. In at least some example embodiments, the bandwidth condition includes a bandwidth of the outgoing link reaching a bandwidth threshold. In at least some example embodiments, the bandwidth threshold of the outgoing link is less than a total bandwidth capacity of the outgoing link. In at least some example embodiments, the first subset of flows is remapped to the at least one other outgoing link based on detection of a bandwidth condition associated with the outgoing link. In at least some example embodiments, the bandwidth condition includes a bandwidth of the outgoing link reaching a bandwidth threshold. In at least some example embodiments, the bandwidth threshold of the outgoing link is less than a total bandwidth capacity of the outgoing link. In at least some example embodiments, to remap the first subset of flows to the at least one other outgoing link, the computer program code is configured to cause the apparatus at least to monitor, for each flow in the set of flows based on the respective link pinning state entries associated with the respective flows, a respective bandwidth consumption of the respective flow on the outgoing link, and identify the first subset of flows and the second subset of flows based on the respective bandwidth consumptions of the respective flows on the outgoing links. In at least some example embodiments, the first subset of flows includes ones of the flows in the set of flows having the highest respective bandwidth consumptions on the outgoing link. In at least some example embodiments, the first subset of flows is remapped to the at least one other outgoing link in a manner tending to evenly distribute traffic of the flows in the set of flows across a set of outgoing links that includes the outgoing link and the at least one other outgoing link. In at least some example embodiments, to remap the first subset of flows to the at least one other outgoing link, the computer program code is configured to cause the apparatus at least to modify, for each flow in the first subset of flows, the respective link pinning state entry of the respective flow from mapping the respective flow to the outgoing link to mapping the respective flow to the at least one other outgoing link. In at least some example embodiments, the ones of the link pinning state entries associated with respective flows in the first subset of flows are retained by continuing to store the ones of the link pinning state entries as long as packets continue to be forwarded on the respective flows. In at least some example embodiments, the ones of the link pinning state entries associated with respective flows in the second subset of flows are deactivated by at least one of deleting the ones of the link pinning state entries or marking the ones of the link pinning state entries for deletion. In at least some example embodiments, to retain ones of the link pinning state entries associated with respective flows in the first subset of flows, the computer program code is configured to cause the apparatus at least to retain the ones of the link pinning state entries associated with respective flows in the first subset of flows by making the ones of the link pinning state entries associated with respective flows in the first subset of flows permanent based on a determination that packets are forwarded on the respective flows in the first subset of flows. In at least some example embodiments, to deactivate ones of the link pinning state entries associated with respective flows in the second subset of flows, the computer program code is configured to cause the apparatus at least to deactivate the ones of the link pinning state entries associated with respective flows in the second subset of flows in response to the ones of the link pinning state entries associated with respective flows in the second subset of flows being updated to reflect the remapping of the respective flows in the second subset of flows from the outgoing link to the at least one other outgoing link. In at least some example embodiments, to retain ones of the link pinning state entries associated with respective flows in the first subset of flows, the computer program code is configured to cause the apparatus at least to change the ones of the link pinning state entries associated with respective flows in the first subset of flows from being temporary entries to being permanent entries. In at least some example embodiments, to deactivate ones of the link pinning state entries associated with respective flows in the second subset of flows, the computer program code is configured to cause the apparatus at least to change the ones of the link pinning state entries associated with respective flows in the second subset of flows from being temporary entries to being deactivated entries.

In at least some example embodiments, a method includes creating, for a set of flows mapped to an outgoing link, a respective set of link pinning state entries mapping the respective flows to the outgoing link, remapping a first subset of flows in the set of flows to at least one other outgoing link while a second subset of flows in the set of flows remain mapped to the outgoing link, and retaining ones of the link pinning state entries associated with respective flows in the first subset of flows and deactivating ones of the link pinning state entries associated with respective flows in the second subset of flows. In at least some example embodiments, the flows in the set of flows are mapped to the outgoing link based on stateless per-flow load balancing. In at least some example embodiments, the set of link pinning state entries is created based on detection of a bandwidth condition associated with the outgoing link. In at least some example embodiments, the bandwidth condition includes a bandwidth of the outgoing link reaching a bandwidth threshold. In at least some example embodiments, the bandwidth threshold of the outgoing link is less than a total bandwidth capacity of the outgoing link. In at least some example embodiments, the first subset of flows is remapped to the at least one other outgoing link based on detection of a bandwidth condition associated with the outgoing link. In at least some example embodiments, the bandwidth condition includes a bandwidth of the outgoing link reaching a bandwidth threshold. In at least some example embodiments, the bandwidth threshold of the outgoing link is less than a total bandwidth capacity of the outgoing link. In at least some example embodiments, remapping the first subset of flows to the at least one other outgoing link includes monitoring, for each flow in the set of flows based on the respective link pinning state entries associated with the respective flows, a respective bandwidth consumption of the respective flow on the outgoing link, and identifying the first subset of flows and the second subset of flows based on the respective bandwidth consumptions of the respective flows on the outgoing links. In at least some example embodiments, the first subset of flows includes ones of the flows in the set of flows having the highest respective bandwidth consumptions on the outgoing link. In at least some example embodiments, the first subset of flows is remapped to the at least one other outgoing link in a manner tending to evenly distribute traffic of the flows in the set of flows across a set of outgoing links that includes the outgoing link and the at least one other outgoing link. In at least some example embodiments, remapping the first subset of flows to the at least one other outgoing link includes modifying, for each flow in the first subset of flows, the respective link pinning state entry of the respective flow from mapping the respective flow to the outgoing link to mapping the respective flow to the at least one other outgoing link. In at least some example embodiments, the ones of the link pinning state entries associated with respective flows in the first subset of flows are retained by continuing to store the ones of the link pinning state entries as long as packets continue to be forwarded on the respective flows. In at least some example embodiments, the ones of the link pinning state entries associated with respective flows in the second subset of flows are deactivated by at least one of deleting the ones of the link pinning state entries or marking the ones of the link pinning state entries for deletion. In at least some example embodiments, retaining ones of the link pinning state entries associated with respective flows in the first subset of flows includes retaining the ones of the link pinning state entries associated with respective flows in the first subset of flows by making the ones of the link pinning state entries associated with respective flows in the first subset of flows permanent based on a determination that packets are forwarded on the respective flows in the first subset of flows. In at least some example embodiments, deactivating ones of the link pinning state entries associated with respective flows in the second subset of flows includes deactivating the ones of the link pinning state entries associated with respective flows in the second subset of flows in response to the ones of the link pinning state entries associated with respective flows in the second subset of flows being updated to reflect the remapping of the respective flows in the second subset of flows from the outgoing link to the at least one other outgoing link. In at least some example embodiments, retaining ones of the link pinning state entries associated with respective flows in the first subset of flows includes changing the ones of the link pinning state entries associated with respective flows in the first subset of flows from being temporary entries to being permanent entries. In at least some example embodiments, deactivating ones of the link pinning state entries associated with respective flows in the second subset of flows includes changing the ones of the link pinning state entries associated with respective flows in the second subset of flows from being temporary entries to being deactivated entries.

In at least some example embodiments, an apparatus includes means for creating, for a set of flows mapped to an outgoing link, a respective set of link pinning state entries mapping the respective flows to the outgoing link, means for remapping a first subset of flows in the set of flows to at least one other outgoing link while a second subset of flows in the set of flows remain mapped to the outgoing link, and means for retaining ones of the link pinning state entries associated with respective flows in the first subset of flows and means for deactivating ones of the link pinning state entries associated with respective flows in the second subset of flows. In at least some example embodiments, the flows in the set of flows are mapped to the outgoing link based on stateless per-flow load balancing. In at least some example embodiments, the set of link pinning state entries is created based on detection of a bandwidth condition associated with the outgoing link. In at least some example embodiments, the bandwidth condition includes a bandwidth of the outgoing link reaching a bandwidth threshold. In at least some example embodiments, the bandwidth threshold of the outgoing link is less than a total bandwidth capacity of the outgoing link. In at least some example embodiments, the first subset of flows is remapped to the at least one other outgoing link based on detection of a bandwidth condition associated with the outgoing link. In at least some example embodiments, the bandwidth condition includes a bandwidth of the outgoing link reaching a bandwidth threshold. In at least some example embodiments, the bandwidth threshold of the outgoing link is less than a total bandwidth capacity of the outgoing link. In at least some example embodiments, the means for remapping the first subset of flows to the at least one other outgoing link includes means for monitoring, for each flow in the set of flows based on the respective link pinning state entries associated with the respective flows, a respective bandwidth consumption of the respective flow on the outgoing link, and means for identifying the first subset of flows and the second subset of flows based on the respective bandwidth consumptions of the respective flows on the outgoing links. In at least some example embodiments, the first subset of flows includes ones of the flows in the set of flows having the highest respective bandwidth consumptions on the outgoing link. In at least some example embodiments, the first subset of flows is remapped to the at least one other outgoing link in a manner tending to evenly distribute traffic of the flows in the set of flows across a set of outgoing links that includes the outgoing link and the at least one other outgoing link. In at least some example embodiments, the means for remapping the first subset of flows to the at least one other outgoing link includes means for modifying, for each flow in the first subset of flows, the respective link pinning state entry of the respective flow from mapping the respective flow to the outgoing link to mapping the respective flow to the at least one other outgoing link. In at least some example embodiments, the ones of the link pinning state entries associated with respective flows in the first subset of flows are retained by continuing to store the ones of the link pinning state entries as long as packets continue to be forwarded on the respective flows. In at least some example embodiments, the ones of the link pinning state entries associated with respective flows in the second subset of flows are deactivated by at least one of deleting the ones of the link pinning state entries or marking the ones of the link pinning state entries for deletion. In at least some example embodiments, the means for retaining ones of the link pinning state entries associated with respective flows in the first subset of flows includes means for retaining the ones of the link pinning state entries associated with respective flows in the first subset of flows by making the ones of the link pinning state entries associated with respective flows in the first subset of flows permanent based on a determination that packets are forwarded on the respective flows in the first subset of flows. In at least some example embodiments, the means for deactivating ones of the link pinning state entries associated with respective flows in the second subset of flows includes means for deactivating the ones of the link pinning state entries associated with respective flows in the second subset of flows in response to the ones of the link pinning state entries associated with respective flows in the second subset of flows being updated to reflect the remapping of the respective flows in the second subset of flows from the outgoing link to the at least one other outgoing link. In at least some example embodiments, the means for retaining ones of the link pinning state entries associated with respective flows in the first subset of flows includes means for changing the ones of the link pinning state entries associated with respective flows in the first subset of flows from being temporary entries to being permanent entries. In at least some example embodiments, the means for deactivating ones of the link pinning state entries associated with respective flows in the second subset of flows includes means for changing the ones of the link pinning state entries associated with respective flows in the second subset of flows from being temporary entries to being deactivated entries. The means may include circuitry configured to perform the considered function(s). The means may include at least one processor and at least one memory storing instructions that, when executed by the at least one processor, cause the apparatus to perform the considered function(s). The apparatus may comprise means for performing one or more or all steps of a method as disclosed herein and/or various function(s) disclosed herein.

### BRIEF DESCRIPTION OF THE DRAWINGS

The teachings herein can be readily understood by considering the following detailed description in conjunction with the accompanying drawings, in which:
FIG. 1 depicts an example embodiment of a communication system configured to support quasi-stateful load balancing;
FIG. 2 depicts an example embodiment of a communication network supporting per-flow load balancing over equal cost multipath (ECMP) paths;
FIG. 3 depicts an example embodiment of a communication network supporting uneven per-flow load balancing;
FIG. 4 depicts an example embodiment of a communication network supporting per-packet load balancing;
FIG. 5 depicts an example embodiment of a communication network supporting stateful load balancing;
FIG. 6 depicts an example embodiment of a communication network supporting aspects of quasi-stateful load balancing;
FIG. 7 depicts an example embodiment of a communication network supporting aspects of quasi-stateful load balancing;
FIG. 8 depicts an example embodiment of a communication network supporting aspects of quasi-stateful load balancing;
FIG. 9 depicts an example embodiment of a communication network supporting aspects of quasi-stateful load balancing;
FIG. 10 depicts an example embodiment of a method for use by a node for forwarding a packet toward a destination using quasi-stateful load balancing;
FIG. 11 depicts an example embodiment of a method for use by a node for supporting uniform load balancing within the context of quasi-stateful load balancing;
FIG. 12 depicts an example embodiment of a method for use by a node for monitoring links for remapping flows within the context of quasi-stateful load balancing;
FIG. 13 depicts an example embodiment of a method for use by a node for monitoring links for rebalancing packet flows on a link within the context of quasi-stateful load balancing;
FIG. 14 depicts an example embodiment of a method for use by a node for creation of temporary link pinning state entries on a link within the context of quasi-stateful load balancing;
FIG. 15 depicts an example embodiment of a method for supporting quasi-stateful load balancing;
FIG. 16 depicts an example embodiment of a method for supporting quasi-stateful load balancing; and
FIG. 17 depicts an example embodiment of a computer suitable for use in performing various functions presented herein.

To facilitate understanding, identical reference numerals have been used herein, wherever possible, in order to designate identical or similar elements that are common among the various figures.

### DETAILED DESCRIPTION

Various example embodiments for supporting quasi-stateful load balancing in communication networks are presented herein. Various example embodiments for supporting quasi-stateful load balancing in communication networks may be configured to reduce or minimize the amount of state information that needs to be maintained by a node for supporting load balancing across outgoing links of the node. Various example embodiments for supporting quasi-stateful load balancing in communication networks may be configured to reduce or minimize the number of link pinning state entries that need to be maintained by a node for supporting load balancing across outgoing links of the node. Various example embodiments for supporting quasi-stateful load balancing in communication networks may be configured to reduce or minimize the number of link pinning state entries that need to be maintained by a node for supporting load balancing across outgoing links of the node by deactivating those link pinning state entries associated with flows that remain default mapped to outgoing links of the node and retaining only those link pinning state entries associated with flows that are remapped between outgoing links of the node. It will be appreciated that these as well as various other example embodiments and advantages or potential advantages of supporting quasi-stateful load balancing in communication networks may be further understood by way of reference to the various figures, which are discussed further below.

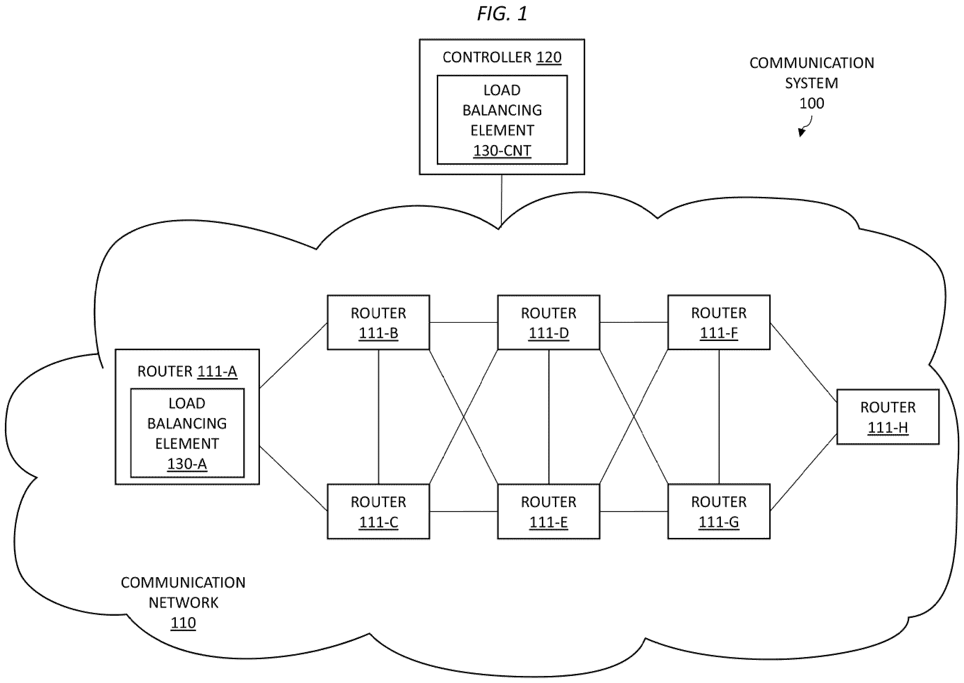

FIG. 1 depicts an example embodiment of a communication system configured to support quasi-stateful load balancing.

The communication system 100 includes a communication network 110 and a controller 120. The communication network 110 is a packet-switched network including a set of routers 111-A - 111-H (collectively, routers 111, which are also referred to herein using the notation of the router A through router H or, more generally, node A through node H) communicatively connected via various communication links. The controller 120 is configured to provide various control functions for the communication network 110 and routers 111 of the communication network 110 (e.g., maintaining network topology and traffic engineering information associated with the routers 111, computing routes for routers 111, or the like, as well as various combinations thereof).

The routers 111 may be configured to support communication of packets based on load balancing. The routers 111 may be configured to support improved or optimal load balancing of packets to a destination using multiple paths to the destination, where the multiple paths may include multiple equal cost multipath (ECMP) paths to the destination or multiple unequal cost multipath (UCMP) paths to the destination, by spraying the packets across the multiple paths to the destination for improved or optimal operation (e.g., packet throughput, network utilization, or the like, as well as various combinations thereof). The routers 111 may be configured to support load balancing of packets based on various load balancing techniques, including stateful load balancing, stateless load balancing, quasi-stateful load balancing, or combinations thereof.

The controller 120 may be configured to support communication of packets based on load balancing. The controller 120 may be configured to support communication of packets by the routers 111 based on load balancing (e.g., computing multiple paths to destinations for the routers 111 and installing the multiple paths to the destinations on the routers 111, or the like, as well as various combinations thereof). The controller 120 may be configured to support load balancing of packets based on various load balancing techniques, including stateful load balancing, stateless load balancing, quasi-stateful load balancing, or combinations thereof.

The communication system 100 may be configured to support communication of packets based on load balancing using various load balancing elements 130. For example, router 111-A illustratively includes a load balancing element 130-A configured to support forwarding of packets based on load balancing techniques such as stateful load balancing, stateless load balancing, quasi-stateful load balancing, and so forth. It will be appreciated that, although omitted for purposes of clarity, the other routers 111-B - 111-H also may include similar load balancing elements configured to support forwarding of packets based on load balancing techniques such as stateful load balancing, stateless load balancing, quasi-stateful load balancing, and so forth. For example, the controller 120 illustratively includes a load balancing element 130-CNT configured to provide control functions for supporting forwarding of packets by the routers 111 based on load balancing techniques such as stateful load balancing, stateless load balancing, quasi-stateful load balancing, and so forth.

It will be appreciated that various example embodiments for supporting quasi-stateful load balancing within the communication system 100 may be further understood by first considering various aspects of stateless load balancing techniques and stateful load balancing techniques.

In stateless load balancing, for load balancing purposes, a packet flow is typically identified as the packets exchanged for an application between two end hosts. For example, a Transmission Control Protocol (TCP) connection for a Hypertext Transfer Protocol (HTTP) application between a user and web server is a packet flow, which can be uniquely identified across the network by the tuple {source address in IP header, destination address in IP header, source port in TCP header, destination port in TCP header}. In this scheme, a node does not maintain any packet flow specific states for load balancing purposes. Stateless load balancing schemes generally can be of two types: per-flow load balancing and per-packet load balancing.

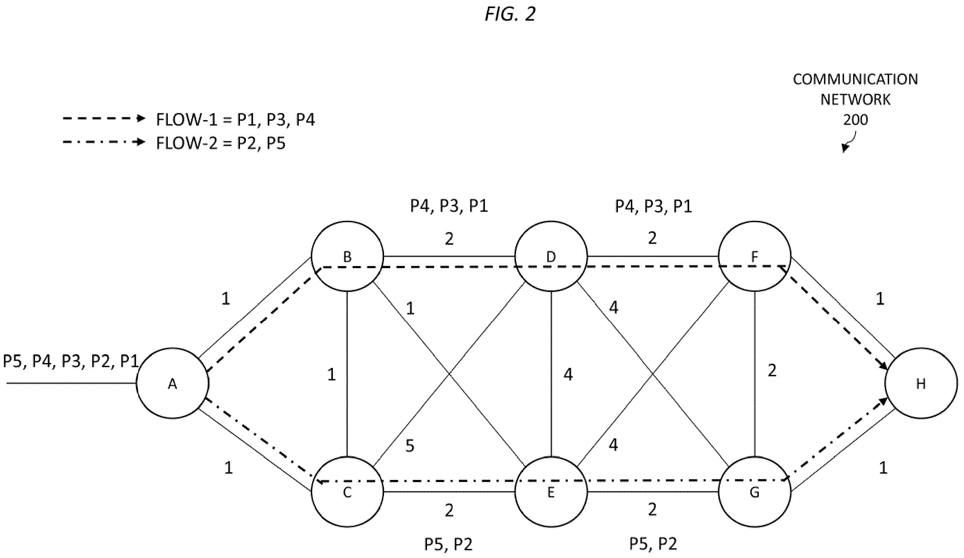

Per-flow load balancing sends each of the packets of a flow over the same outgoing link. In per-flow load balancing, the load balancing node classifies each packet by its packet flow. The load balancing node computes a hash value based on the flow tuple encoded in a packet and then performs modulo on the hash value by the number of outgoing links to the intended destination of the packet. The result is the outgoing link for the packet, i.e., outgoing_link = hash (flow tuple) % number_of outgoing_links. The computation is performed on every packet, so there is no need to maintain state of a flow in the node balancing node. Every packet that belongs to a flow gets forwarded on the same outgoing link and this guarantees that packets in the flow arrives at the destination in order. For example, if TCP packets arrive at the destination out of order then it impacts the performance of the connection. If voice or video traffic is transmitted on a TCP connection then out of order arrival of packets can result in delays or jitters in voice and video, which in turn degrades the user experience. An example embodiment of per-flow load balancing over ECMP is presented in FIG. 2.

FIG. 2 depicts an example embodiment of a communication network supporting per-flow load balancing over ECMP paths.

The communication network 200 includes nodes A - H with interconnecting links. Each link is assigned a cost (or metric) in the topology graph, which is used for computation of paths to destinations. The costs assigned to the links are illustrated next to the links. In this example, assume that each node computes paths to the destinations using a shortest path first (SPF) algorithm on the topology graph, e.g., using Dijkstra's algorithm.

The communication network 200 includes two ECMP paths from node A to node H. The first path is A->B->D->F->H and the second path is A->C->E->G->H, each of cost 6. Assume that the bandwidth (BW) available on path 1 is 100 Mbps and that the bandwidth on path 2 is 50 Mbps. Node A receives, on an incoming link, the packets P1, P2, P3, P4, and P5, which are to be transmitted to node H. Node A classifies the packets into their associated flows. Packets P1, P3, and P4 are associated with Flow 1 and packets P2 and P5 are associated with Flow 2. Hash computation on Flow 1 maps to the first path and hash computation on Flow 2 maps to the second path. So packets P1, P3, and P4 are forwarded on the first path and packets P2 and P5 are forwarded on the second path. The packets on each flow arrive at node H exactly in the order. The bandwidth consumed by Flow 1 and Flow 2 are 40 Mbps and 30 Mbps, respectively.

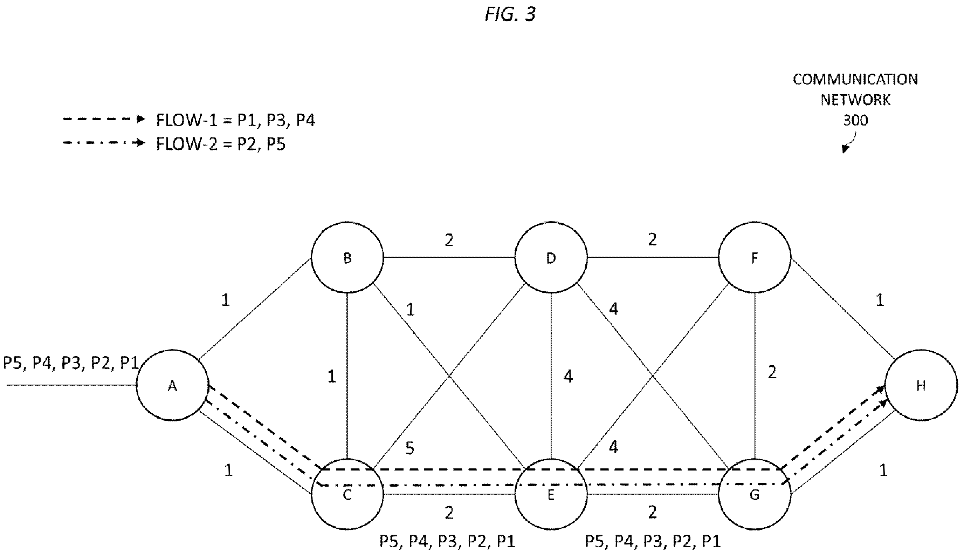

In per-flow load balancing, packet flows to a destination may not be evenly distributed across all outgoing links to the destination since choice of the outgoing link depends on the flow specific fields in the headers the packet. In the worst case, all packet flows may get hashed (mapped) to the same outgoing link. For example, assume that both Flow 1 and Flow 2 in FIG. 2 get mapped on the second path as per hash computation, while the path 1 remains unutilized. This is illustrated in FIG. 3, which depicts an example embodiment of uneven per-flow load balancing. In the communication network 300, the bandwidth available on the second path is 50 Mbps, but the aggregate bandwidth of Flow 1 and Flow 2 is 70 Mbps (40Mbps + 30 Mbps), which exceeds the maximum BW of the path. As a result, packets worth 20 Mbps will be dropped along the second path.

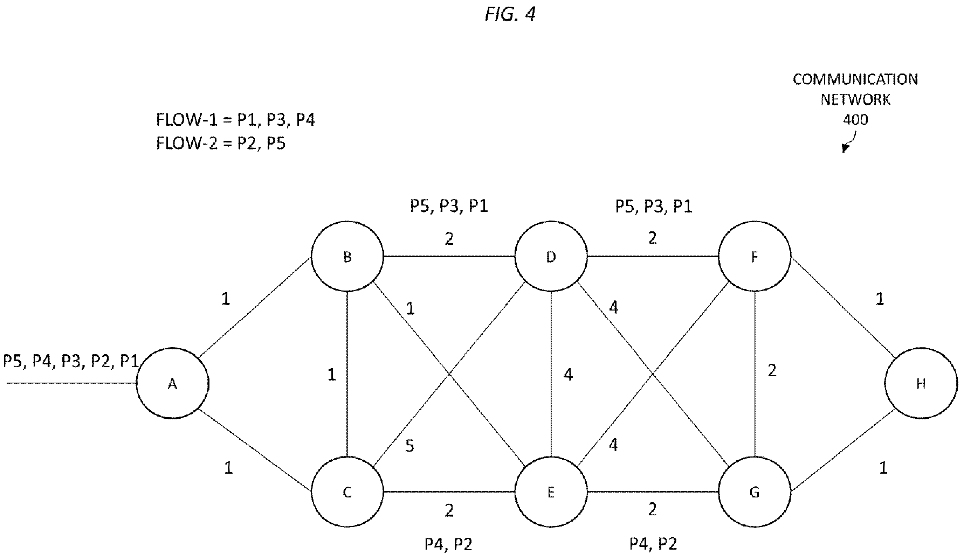

Per-packet load balancing addresses the problem of uneven per-flow load balancing by evenly load balancing the packets to a destination across all outgoing links to the destination. The load balancing node is agnostic of a packet flow and spays all packets to a destination among the outgoing links in a round-robin manner. So, it does not guarantee sequential delivery of packets of a flow since packets of a flow can get sprayed across multiple links. An example embodiment of per-packet load balancing is presented in FIG. 4.

FIG. 4 depicts an example embodiment of a communication network supporting per-packet load balancing. In the communication network 400, the load balancing node A receives the packets to be sent to node H in the order P1, P2, P3, P4, P5. The packets P1, P3, and P4 belong to Flow 1 and the packets P2 and P5 belong to Flow 2. Node A load balances the packets among the two outgoing links, A->B and A->C, in round robin manner. So, packets P1, P3, and P5 are forwarded on the first path and the packets P2 and P4 are forwarded on the second path. As evident, packets of both of the flows are sprayed across the two paths.

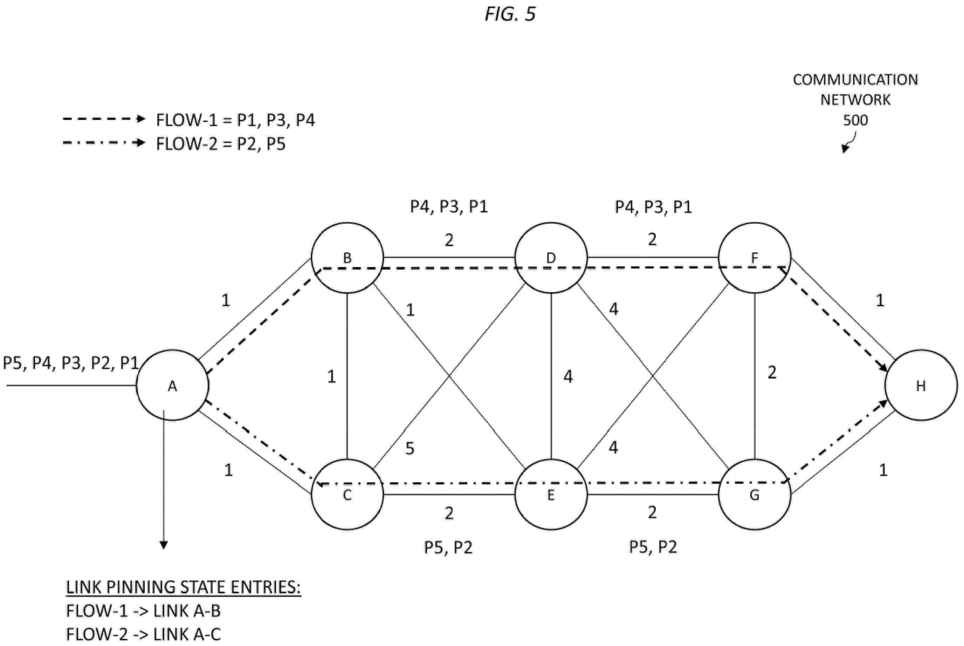

In stateful load balancing, a node dynamically creates states of packet flows by snooping the flow specific tuple in the packet headers. If a flow is no longer sending packets for a certain duration then the node deletes such stale flows. An outgoing link among the multiple outgoing links for the flow is determined based on the measured bandwidth of the flow and keeping in view of even distribution of all flows across all links. Once the outgoing link for a flow is determined, the state of the flow keeps a record of the chosen outgoing link and all packets of the flow are forwarded on that link based on that state. Herein, unless indicated otherwise, this state of a packet flow is referred to as a link pinning state (LPS) of the packet flow. Stateful load balancing generally guarantees even load balancing of packets to destination as well as in-order delivery of packets at the destination. An example embodiment of stateful load balancing is presented in FIG. 5.

FIG. 5 depicts an example embodiment of a communication network supporting stateful load balancing. In communication network 500, the load balancing node A receives the packets to be sent to node H in the order P1, P2, P3, P4, P5. The packets P1, P3, and P4 belong to Flow 1 and the packets P2 and P5 belong to Flow 2. For example, assume that in a stateless per-flow load balancing paradigm, both flows would have mapped to link A->C (i.e., the second path). However, in a stateful load balancing paradigm, node A decides to evenly map the flows across the two links. Node A creates an LPS for Flow 1 pinned to link A->B and an LPS for Flow 2 pinned to link A->C.

Various example embodiments presented herein may be configured to support quasi-stateful load balancing which may utilize aspects of stateless load balancing and stateful load balancing and which may overcome various potential issues associated with use of stateless load balancing and stateful load balancing. The stateless load balancing schemes are scalable because a load balancing node does not have to maintain states of the packet flows (LPSs); however, the per-flow load balancing scheme can result in uneven load balancing, resulting in traffic loss on overloaded links. The per-packet load balancing scheme does not guarantee in-order delivery of the packets of a flow, so the scheme is not applicable for flows that demand sequential delivery of its packets. For example, all TCP traffic requires in-order delivery and, currently, approximately 70% of Internet traffic is based on TCP. The stateful load balancing scheme provides even load balancing and strict in-order delivery of packets, but is not scalable when the number of flows is very high (e.g., multiples of millions). Various example embodiments of quasi-stateful load balancing, as discussed further below, may be configured to provide even load balancing and strict in-order delivery, which is desirable in various contexts and generally unavailable with stateless load balancing and stateful load balancing schemes.

Various example embodiments presented herein may be configured to support quasi-stateful load balancing, which is a hybrid of stateless per-flow load balancing and stateful load balancing. A node may perform quasi-stateful load balancing as follows. The node starts load balancing with stateless per-flow load balancing (e.g., by hashing on the tuple that identifies a flow). This way of mapping a flow to an outgoing link is referred to herein as a default mapping. The node monitors bandwidth consumption on each outgoing link. If a link is nearing overload then the node starts creating temporary LPS entries for the flows that are default mapped on the link and monitors bandwidth consumption on each of the LPS entries for a specific duration. After the bandwidth on each LPS entry is determined, the node shifts the higher bandwidth LPS entries to under-utilized links (among the multiple outgoing links for the respective flows). The LPS entries are remapped to links in a way such that traffic is evenly distributed across the links. The node makes the remapped LPS entries of the flows into permanent LPS entries as long as packets continue to be forwarded on the flows. The node then deactivates temporary LPS entries that remain pinned to the link that was originally nearing overload (e.g., deleting the LPS entries from the node, marking the LPS entries for deletion on the node, or the like), because the corresponding flows continue to be default mapped to the link. In at least some example embodiments, since the remapping of flows from oversubscribed links to undersubscribed links takes time due to the need to perform bandwidth consumption measurements for the flows default mapped on the oversubscribed link using the temporary LPSs for the flows, an overload threshold may be defined for a link (e.g., a threshold that is less than the maximum bandwidth available on the link) and when the node detects that the overload threshold on the link has been reached then the node can begin monitoring the bandwidth consumption of the flows on the link for identifying which of the flows are to be remapped from the link to one or more other links (so that flows can be transferred to other links before the bandwidth of the oversubscribed link is exceeded). It will be appreciated, as discussed further below, that with quasi-stateful load balancing the node needs to maintain LPS entries for only those flows which are remapped to a link other than its default mapped link and, thus, the solution is more scalable than stateful load balancing.

It will be appreciated that various example embodiments for supporting quasi-stateful load balancing may be configured to guarantee that the maximum number of LPS entries in a node is always less than the number of LPS entries required when stateful load balancing is used by the node. For example, assume that there are N flows being load balanced by a node. In stateful load balancing, the node needs to maintain N x LPS entries. In the worst case of quasi-stateful load balancing, there will be two outgoing links for N flows and all flows would default map to the first link (i.e., by hash computation on flow specific fields in packet headers). Here, assume that all N flows consume the same amount of bandwidth. In that case, a maximum of N/2 flows need to be shifted to the second link. Thus, the node will maintain N/2 LPS entries at the maximum. In the best case of quasi-stateful load balancing, when all N flows are evenly default mapped across all outgoing links then the node does not have to maintain any LPS entries at all.

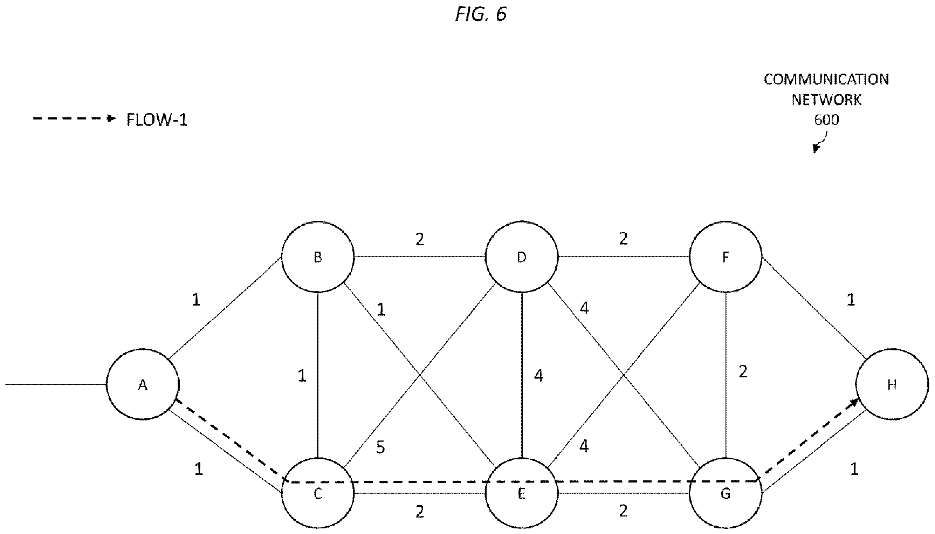

It will be appreciated that various example embodiments of quasi-stateful load balancing may be further understood by way of the example presented with respect to FIGs. 6-9, which are discussed further below.

In the example of FIGs. 6-9, various aspects of quasi-stateful load balancing are used for supporting a pair of flows from node A to node H. As illustrated in each of FIG. 6 through FIG. 9, node A has two outgoing links (namely, link A->B and link A->C) over which node A may send received packets intended for node H.

In FIG. 6, assume that, initially, no packets are seen by node A. Then, at some point, node A starts receiving packets for Flow 1, which gets default mapped to the second path (link A->C) by a hash computation on the tuple that defines Flow 1. Node A monitors the bandwidth utilization on each link and determines that Flow 1 consumes 40 Mbps on link A->C while the bandwidth on link A->C is 50 Mbps. So, 10 Mbps of capacity is available on link A->C.

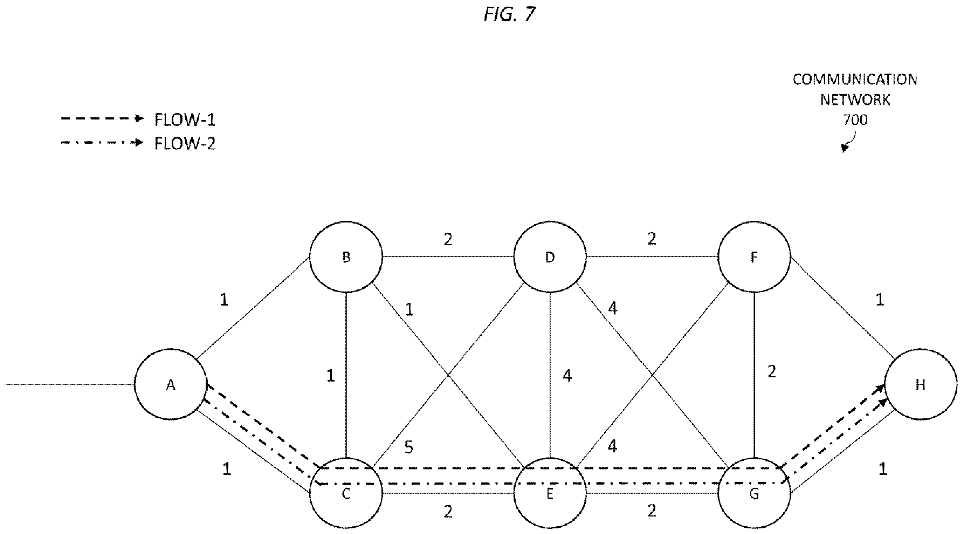

In FIG. 7, node A starts receiving packets for Flow 2, which gets default mapped to the second path (link A->C) by a hash computation on the tuple that defines Flow 2. Flow 2 consumes 30 Mbps and, thus, the link A->C gets oversubscribed.

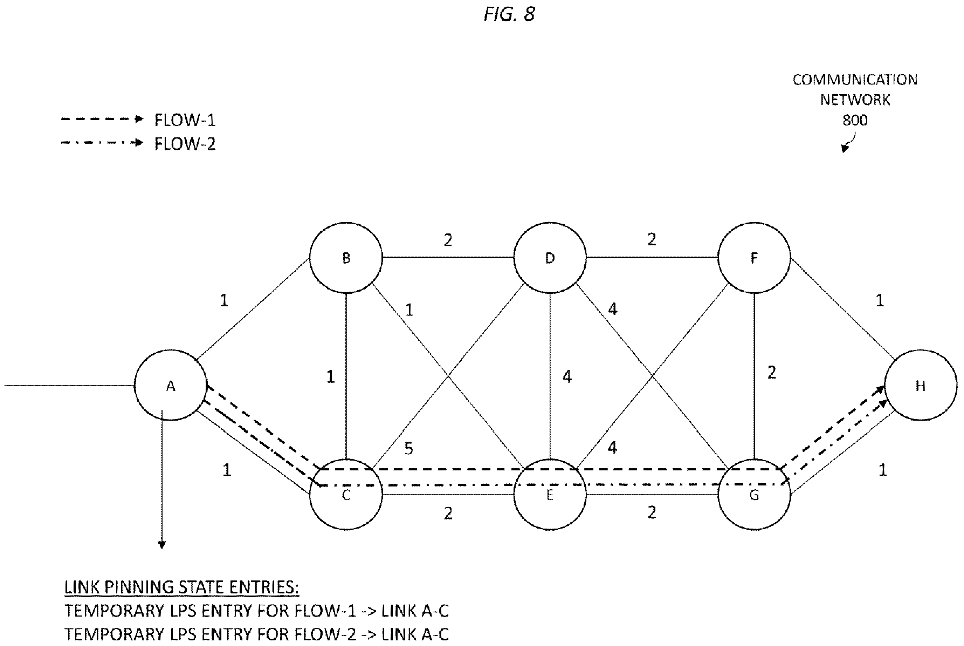

In FIG. 8, stateful monitoring of the two flows is performed since the link A->C is oversubscribed. Node A starts monitoring the bandwidth consumed by each flow mapped to link A->C. Node A creates temporary LPS entries for the two flows and monitors the BW consumption on the temporary LPS entries for the two flows. Node A finds that Flow 1 is consuming 40 Mbps and Flow 2 is consuming 30 Mbps.

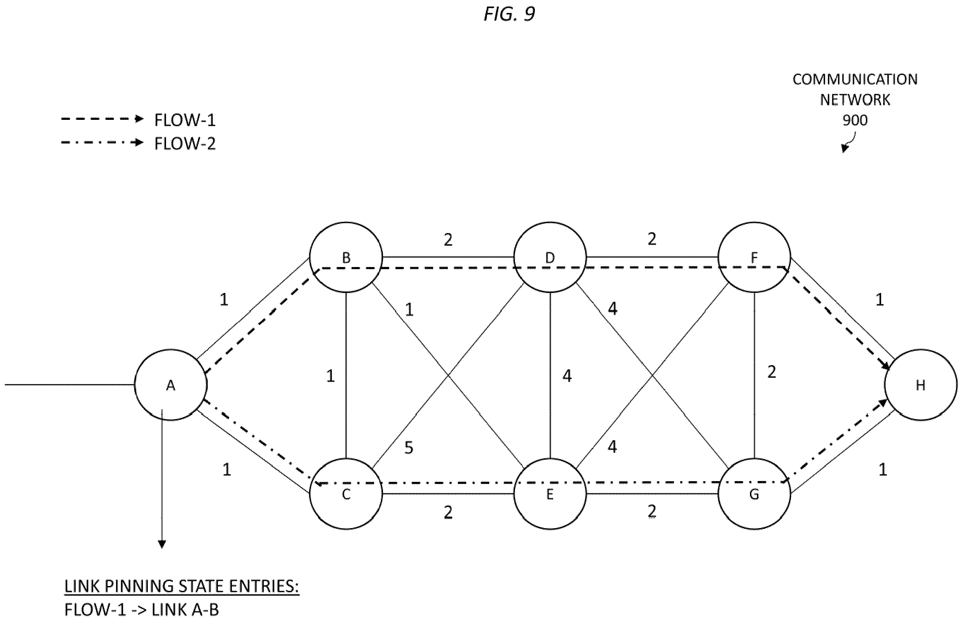

In FIG. 9. Quasi-stateful load balancing is applied. Node A finds that Flow 1 is consuming 40 Mbps and that Flow 2 is consuming 30 Mbps, and sorts them in descending order of bandwidth consumption. Node A, since the first path (via link A->B) has 100 Mbps available, remaps the Flow 1 onto the link A->B. The LPS entry for Flow 1 is marked as permanent and its outgoing link is updated from A->C to A->B. Now, the flows are evenly load balanced between the two paths and so no more remapping is necessary. Since Flow 2 continues to default map to outgoing link A->C, node A deletes the temporary LPS created for Flow 2 since it is no longer needed. Thus, Node A needs to maintain LPS for only Flow 1. This final state is depicted in FIG. 9.

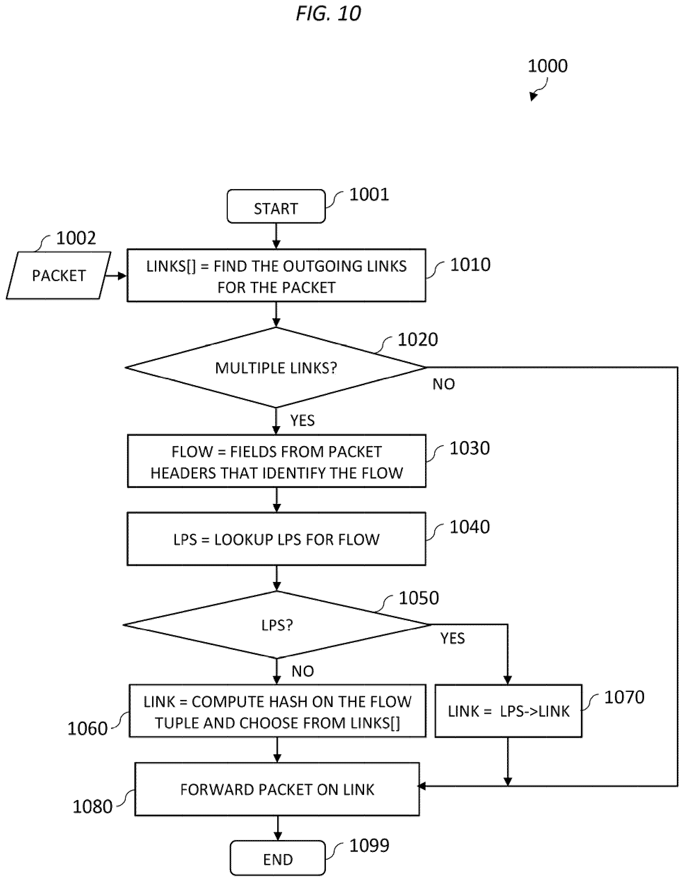

FIG. 10 depicts an example embodiment of a method for use by a node for forwarding a packet toward a destination using quasi-stateful load balancing. It will be appreciated that, although primarily presented herein as being performed serially, at least a portion of the functions of method 1000 may be performed contemporaneously or in a different order than as presented in FIG. 10. At block 1001, the method 1000 begins. As indicated by block 1002, the input to the method 1000 is a packet to be forwarded by the node. At block 1010, the set of outgoing links for the packet is determined. This operation may be performed by looking up the destination of the packet in a routing table associated with the type of the packet. For example, if the packet is an IP packet then the destination address in the IP header is looked up in the IP routing table. For example, if the packet is an MPLS packet then the incoming MPLS label is looked up in the Incoming Label Map (ILM) table. For example, if the packet is an Ethernet packet then the destination Media Access Control (MAC) address is looked up in the MAC forwarding table. At block 1020, a determination is made as to whether there are multiple outgoing links for the packet. If there are not multiple outgoing links for the packet, the method 1000 proceeds to block 1080. If there are multiple outgoing links for the packet, the method 1000 proceeds to block 1030. At block 1030, a tuple identifying the flow is created using the fields from the various headers in the packet that identify the flow associated with the packet. At block 1040, an LPS entry for the flow associated with the packet is looked up. If an LPS entry for the flow associated with the packet is found then the method 1000 proceeds to block 1070; otherwise, if an LPS entry for the flow associated with the packet is not found then the method 1000 proceeds to block 1060. At block 1060, a hash is computed on the tuple that represents the flow and one of the multiple outgoing links is selected based on the hash that is computed on the tuple that represents the flow, and the method 1000 then proceeds to block 1080. At block 1070, the outgoing link indicated in the LPS entry is selected for the packet of the flow, and the method 1000 then proceeds to block 1080. At block 1080, the packet is forwarded on the outgoing link. At block 1099, the method 1000 ends. It will be appreciated that the method 1000 may be implemented in various other ways.

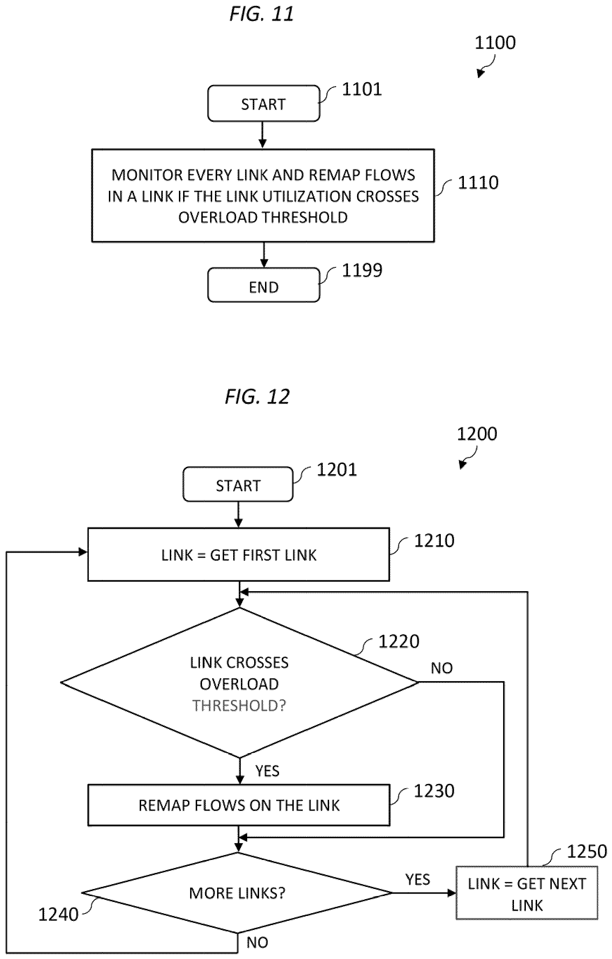

FIG. 11 depicts an example embodiment of a method for use by a node for supporting uniform load balancing within the context of quasi-stateful load balancing. It will be appreciated that, although primarily presented herein as being performed serially, at least a portion of the functions of method 1100 may be performed contemporaneously or in a different order than as presented in FIG. 11. At block 1101, the method 1100 begins. At block 1110, every link is monitored and if the bandwidth of a link crosses its overload threshold then the flows on the link are remapped. In at least some example embodiments, block 1110 may be implemented based on the method of FIG. 12. At block 1199, the method 1100 ends. It will be appreciated that the method 1100 may be implemented in various other ways.

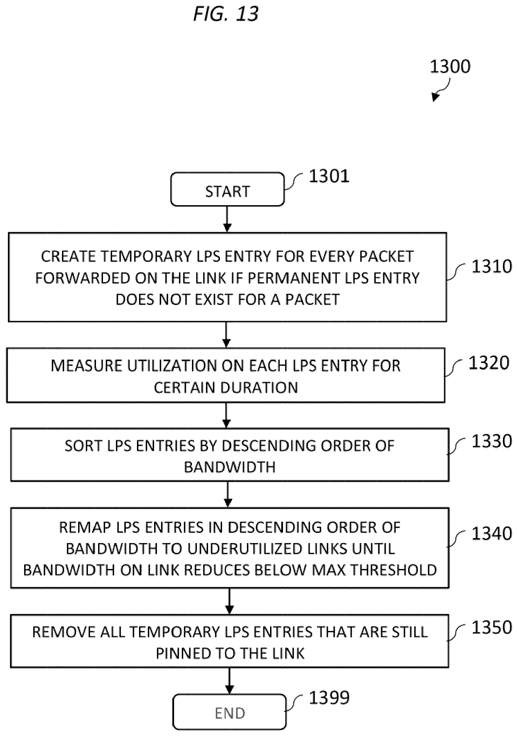

FIG. 12 depicts an example embodiment of a method for use by a node for monitoring links for remapping flows within the context of quasi-stateful load balancing. It is noted that method 1200 of FIG. 12 may be used to provide block 1110 of the method 1100 of FIG. 11. It will be appreciated that, although primarily presented herein as being performed serially, at least a portion of the functions of method 1200 may be performed contemporaneously or in a different order than as presented in FIG. 12. At block 1201, the method 1200 begins. At block 1210, the first link in the node is retrieved. At block 1220, a determination is made as to whether the link utilization of the retrieved link has crossed the overload threshold of the retrieved link. If the link utilization of the retrieved link has not crossed the overload threshold of the retrieved link then the method 1200 proceeds to block 1240; otherwise, if the link utilization of the retrieved link has crossed the overload threshold of the retrieved link then the method 1200 proceeds to block 1230. At block 1230, the flows on the link are remapped, and the method 1200 then proceeds to block 1240. In at least some example embodiments, block 1230 may be implemented based on the method of FIG. 13. At 1240, a determination is made as to whether the node has more links that have not been monitored in the current iteration. If the node has more links that have not been monitored in the current iteration then the method 1200 proceeds to block 1250. At block 1250, the next link of the node to be monitored is selected, and the method 1200 then returns to block 1220 to perform monitoring of the next link of the node to determine whether remapping of flows on the next link of the node is needed. If the node does not have more links that have not been monitored in the current iteration then the method 1200 returns to block 1210, where the first link in the node is again retrieved to begin the next iteration of monitoring each of the links of the node. It will be appreciated that the method 1200 is not depicted as ending as the node is expected to monitor the links continually; however, it will be appreciated that the method 1200 may be invoked and/or terminated under various conditions. For example, the method 1200 may be invoked periodically by a timer, may be scheduled to run a predetermined number of times and then stop before being invoked to start running again, or the like, as well as various combinations thereof. It will be appreciated that the method 1200 may be implemented in various other ways.

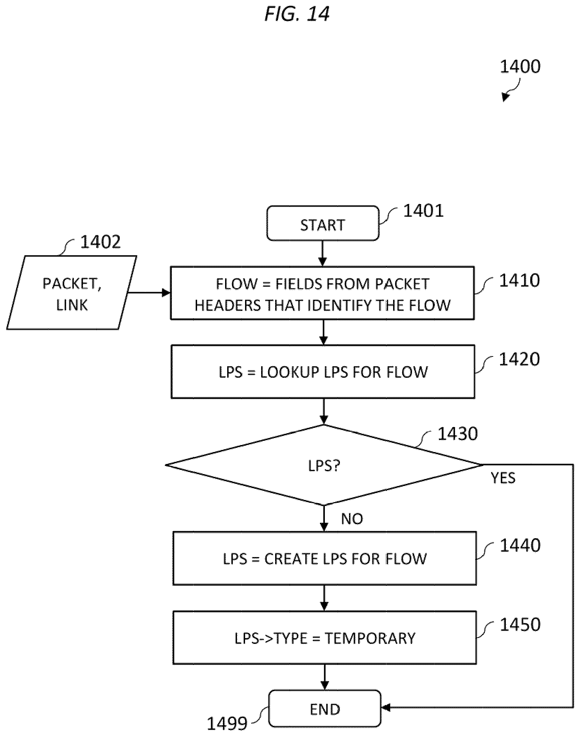

FIG. 13 depicts an example embodiment of a method for use by a node for monitoring links for rebalancing packet flows on a link within the context of quasi-stateful load balancing. It is noted that method 1300 of FIG. 13 may be used to provide block 1230 of the method 1200 of FIG. 12. It will be appreciated that, although primarily presented herein as being performed serially, at least a portion of the functions of method 1300 may be performed contemporaneously or in a different order than as presented in FIG. 13. At block 1301, the method 1300 begins. At block 1310, a temporary LPS entry is created for each packet forwarded on the link if the packet is not associated with a permanent LPS entry. Basically, this step creates an LPS entry for every flow forwarded on the link. In at least some example embodiments, block 1310 may be implemented based on the method of FIG. 14. At block 1320, the bandwidth consumed by packets of each LPS entry is measured for a certain duration (e.g., 30 seconds, one minute, or the like). At block 1330, the LPS entries are sorted by descending order of bandwidth utilization. At block 1340, the LPSs are remapped in the descending order of bandwidth to the underutilized links until the bandwidth on the link satisfies a condition (e.g., falls below the maximum threshold of the link, falls below the maximum threshold of the link by a threshold amount, or the like). The descending order ensures the minimum number of temporary LPSs that are remapped and, thus, which become permanent. At block 1350, all temporary LPS entries that are still pinned on the link are removed and those packet flows continue to be forwarded on the link using stateless load balancing. At block 1399, the method 1300 ends. It will be appreciated, as indicated above, that, although primarily presented herein as being performed serially, at least a portion of the functions of method 1300 may be performed contemporaneously or in a different order than as presented in FIG. 13. For example, in at least some example embodiments, a timer may be started at the beginning of the execution of the method 1300 and blocks 1310 and 1320 may be executed in parallel until the expiration of the timer (which may be referred to as the "link monitor interval"), and then the remainder of the method 1300 may be executed. It will be appreciated that the method 1300 may be implemented in various other ways.

FIG. 14 depicts an example embodiment of a method for use by a node for creation of temporary link pinning state entries on a link within the context of quasi-stateful load balancing. It is noted that method 1400 of FIG. 14 may be used to provide block 1310 of the method 1300 of FIG. 13 (and, thus, may be executed for each packet forwarded on the link during the link monitoring interval). It will be appreciated that, although primarily presented herein as being performed serially, at least a portion of the functions of method 1400 may be performed contemporaneously or in a different order than as presented in FIG. 14. At block 1401, the method 1400 begins. As indicated by block 1402, the inputs to the method 1400 include a packet to be forwarded by the node on the overloaded link and an indication of the overloaded link. At block 1410, the field(s) in the header(s) of the packet that identify the flow associated with the packet is/are parsed. At block 1420, the LPS for the flow is looked up. At block 1430, a determination is made as to whether the LPS for the flow exists. If the LPS exists then the method 1400 proceeds to block 1499, where the method 1400 ends. If the LPS does not exist, then the method 1400 proceeds to block 1440. At block 1440, an LPS entry for the flow is created. At block 1450, the LPS type of the LPS entry for the flow is set as "temporary". At block 1499, the method 1400 ends.

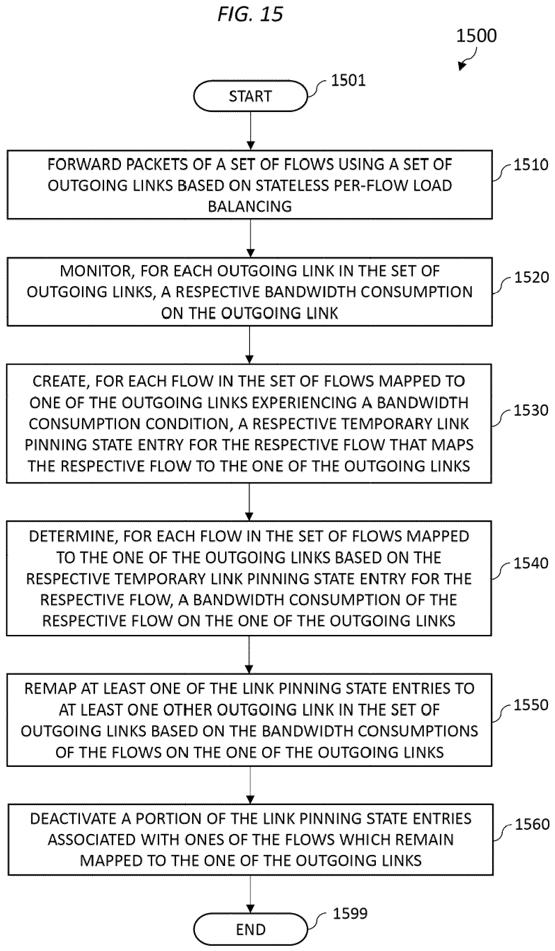

FIG. 15 depicts an example embodiment of a method for supporting quasi-stateful load balancing. It will be appreciated that, although primarily presented herein as being performed serially, at least a portion of the functions of method 1500 may be performed contemporaneously or in a different order than as presented in FIG. 15. At block 1501, the method 1500 begins. At block 1510, forward packets of a set of flows using a set of outgoing links based on stateless per-flow load balancing. At block 1520, monitor, for each outgoing link in the set of outgoing links, a respective bandwidth consumption on the outgoing link. At block 1530, create, for each flow in the set of flows mapped to one of the outgoing links experiencing a bandwidth consumption condition, a respective temporary link pinning state entry for the respective flow that maps the respective flow to the one of the outgoing links. At block 1540, determine, for each flow in the set of flows mapped to the one of the outgoing links based on the respective temporary link pinning state entry for the respective flow, a bandwidth consumption of the respective flow on the one of the outgoing links. At block 1550, remap at least one of the link pinning state entries to at least one other outgoing link in the set of outgoing links based on the bandwidth consumptions of the flows on the one of the outgoing links. At block 1560, deactivate a portion of the link pinning state entries associated with ones of the flows which remain mapped to the one of the outgoing links. At block 1599, the method 1500 ends.

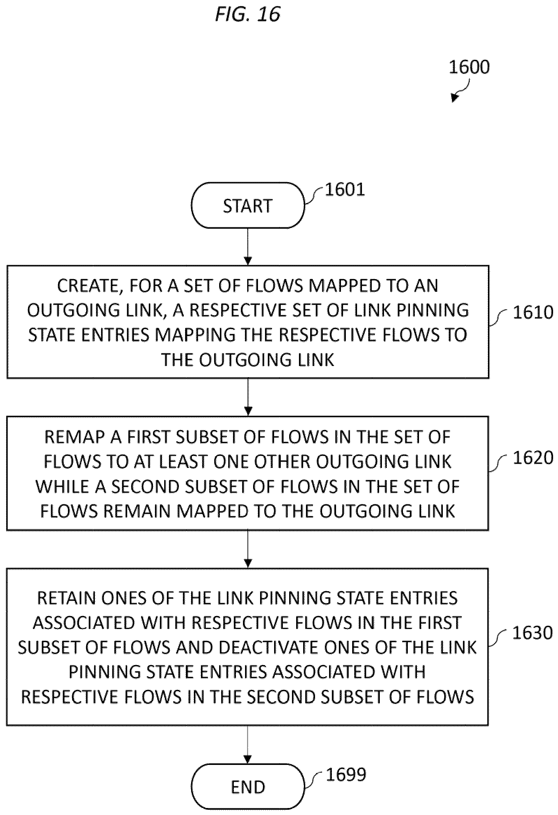

FIG. 16 depicts an example embodiment of a method for supporting quasi-stateful load balancing. It will be appreciated that, although primarily presented herein as being performed serially, at least a portion of the functions of method 1600 may be performed contemporaneously or in a different order than as presented in FIG. 16. At block 1601, the method 1600 begins. At block 1610, create, for a set of flows mapped to an outgoing link, a respective set of link pinning state entries mapping the respective flows to the outgoing link. At block 1620, remap a first subset of flows in the set of flows to at least one other outgoing link while a second subset of flows in the set of flows remain mapped to the outgoing link. At block 1630, retain ones of the link pinning state entries associated with respective flows in the first subset of flows and deactivate ones of the link pinning state entries associated with respective flows in the second subset of flows. At block 1699, the method 1600 ends.

Various example embodiments for supporting quasi-stateful load balancing in communication networks may provide various advantages or potential advantages. For example, various example embodiments for supporting quasi-stateful load balancing in communication networks may be configured to support load balancing in a manner that realizes benefits of both stateful load balancing and stateless load balancing. For example, various example embodiments for supporting quasi-stateful load balancing in communication networks may be configured to reduce or minimize the amount of state information that needs to be maintained by a node for supporting load balancing across outgoing links of the node. For example, various example embodiments for supporting quasi-stateful load balancing in communication networks may be configured to reduce or minimize the number of link pinning state entries that need to be maintained by a node for supporting load balancing across outgoing links of the node. Various example embodiments for supporting quasi-stateful load balancing in communication networks may provide various other advantages or potential advantages.

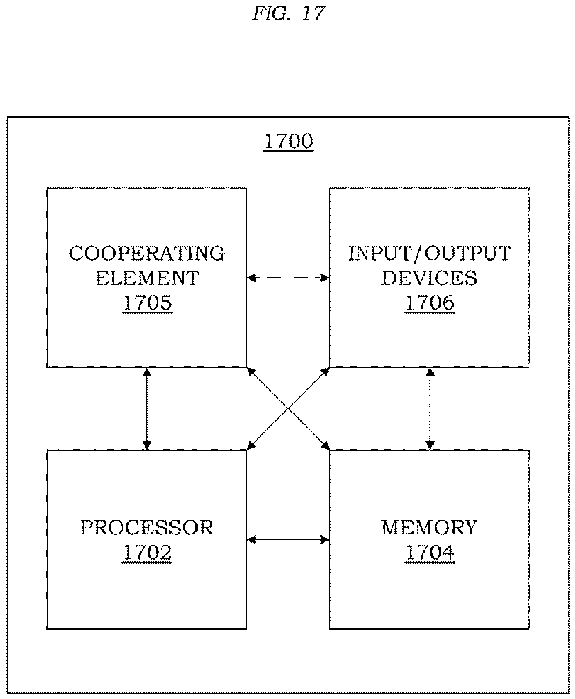

FIG. 17 depicts an example embodiment of a computer suitable for use in performing various functions presented herein.

The computer 1700 includes a processor 1702 (e.g., a central processing unit (CPU), a processor, a processor having one or more processor cores, a processor core of a processor, or the like) and a memory 1704 (e.g., a random access memory, a read only memory, or the like). The processor 1702 and the memory 1704 may be communicatively connected. In at least some example embodiments, the computer 1700 may include at least one processor and at least one memory including computer program code, wherein the at least one memory and the computer program code are configured to, with the at least one processor, cause the computer to perform various functions presented herein.

The computer 1700 also may include a cooperating element 1705. The cooperating element 1705 may be a hardware device. The cooperating element 1705 may be a process that can be loaded into the memory 1704 and executed by the processor 1702 to implement various functions presented herein (in which case, for example, the cooperating element 1705 (including associated data structures) can be stored on a non-transitory computer-readable storage medium, such as a storage device or other suitable type of storage element (e.g., a magnetic drive, an optical drive, or the like)).

The computer 1700 also may include one or more input/output devices 1706. The input/output devices 1706 may include one or more of a user input device (e.g., a keyboard, a keypad, a mouse, a microphone, a camera, or the like), a user output device (e.g., a display, a speaker, or the like), one or more network communication devices or elements (e.g., an input port, an output port, a receiver, a transmitter, a transceiver, or the like), one or more storage devices (e.g., a tape drive, a floppy drive, a hard disk drive, a compact disk drive, or the like), or the like, as well as various combinations thereof.

It will be appreciated that computer 1700 may represent a general architecture and functionality suitable for implementing functional elements described herein, portions of functional elements described herein, or the like, as well as various combinations thereof. For example, computer 1700 may provide a general architecture and functionality that is suitable for implementing one or more elements presented herein, such as node or a portion thereof (e.g., a router or a portion thereof), a controller or a portion thereof (e.g., a network controller or a portion thereof), or the like, as well as various combinations thereof.

It will be appreciated that at least some of the functions presented herein may be implemented in software (e.g., via implementation of software on one or more processors, for executing on a general purpose computer (e.g., via execution by one or more processors) so as to provide a special purpose computer, and the like) and/or may be implemented in hardware (e.g., using a general purpose computer, one or more application specific integrated circuits, and/or any other hardware equivalents).

It will be appreciated that at least some of the functions presented herein may be implemented within hardware, for example, as circuitry that cooperates with the processor to perform various functions. Portions of the functions/elements described herein may be implemented as a computer program product wherein computer instructions, when processed by a computer, adapt the operation of the computer such that the methods and/or techniques described herein are invoked or otherwise provided. Instructions for invoking the various methods may be stored in fixed or removable media (e.g., non-transitory computer-readable media), transmitted via a data stream in a broadcast or other signal bearing medium, and/or stored within a memory within a computing device operating according to the instructions.

It will be appreciated that the term "or" as used herein refers to a non-exclusive "or" unless otherwise indicated (e.g., use of "or else" or "or in the alternative").

It will be appreciated that, although various embodiments which incorporate the teachings presented herein have been shown and described in detail herein, those skilled in the art can readily devise many other varied embodiments that still incorporate these teachings.

## Claims

1. Apparatus comprising means for performing:
creating, for a set of flows mapped to an outgoing link, a respective set of link pinning state entries mapping the respective flows to the outgoing link;
remapping a first subset of flows in the set of flows to at least one other outgoing link while a second subset of flows in the set of flows remain mapped to the outgoing link; and
retaining ones of the link pinning state entries associated with respective flows in the first subset of flows and deactivating ones of the link pinning state entries associated with respective flows in the second subset of flows.

2. The apparatus according to claim 1, wherein the flows in the set of flows are mapped to the outgoing link based on stateless per-flow load balancing.

3. The apparatus according to any of claims 1 to 2, wherein the set of link pinning state entries is created based on detection of a bandwidth condition associated with the outgoing link.

4. The apparatus according to any of claims 1 to 3, wherein the first subset of flows is remapped to the at least one other outgoing link based on detection of a bandwidth condition associated with the outgoing link.

5. The apparatus according to any of claims 1 to 4, wherein, for remapping the first subset of flows to the at least one other outgoing link, the apparatus includes means for performing:
monitoring, for each flow in the set of flows based on the respective link pinning state entries associated with the respective flows, a respective bandwidth consumption of the respective flow on the outgoing link; and
identifying the first subset of flows and the second subset of flows based on the respective bandwidth consumptions of the respective flows on the outgoing links.

6. The apparatus according to claim 5, wherein at least one of:
the first subset of flows includes ones of the flows in the set of flows having the highest respective bandwidth consumptions on the outgoing link; or
the first subset of flows is remapped to the at least one other outgoing link in a manner tending to evenly distribute traffic of the flows in the set of flows across a set of outgoing links that includes the outgoing link and the at least one other outgoing link.

7. The apparatus according to any of claims 1 to 6, wherein, for remapping the first subset of flows to the at least one other outgoing link, the apparatus includes means for performing:
modifying, for each flow in the first subset of flows, the respective link pinning state entry of the respective flow from mapping the respective flow to the outgoing link to mapping the respective flow to the at least one other outgoing link.

8. The apparatus according to any of claims 1 to 7, wherein the ones of the link pinning state entries associated with respective flows in the first subset of flows are retained by continuing to store the ones of the link pinning state entries as long as packets continue to be forwarded on the respective flows.

9. The apparatus according to any of claims 1 to 8, wherein the ones of the link pinning state entries associated with respective flows in the second subset of flows are deactivated by at least one of deleting the ones of the link pinning state entries or marking the ones of the link pinning state entries for deletion.

10. The apparatus according to any of claims 1 to 9, wherein, for retaining ones of the link pinning state entries associated with respective flows in the first subset of flows, the apparatus includes means for performing:
retaining the ones of the link pinning state entries associated with respective flows in the first subset of flows by making the ones of the link pinning state entries associated with respective flows in the first subset of flows permanent based on a determination that packets are forwarded on the respective flows in the first subset of flows.

11. The apparatus according to any of claims 1 to 10, wherein, for deactivating ones of the link pinning state entries associated with respective flows in the second subset of flows, the apparatus includes means for performing:
deactivating the ones of the link pinning state entries associated with respective flows in the second subset of flows in response to the ones of the link pinning state entries associated with respective flows in the second subset of flows being updated to reflect the remapping of the respective flows in the second subset of flows from the outgoing link to the at least one other outgoing link.

12. The apparatus according to any of claims 1 to 11, wherein, for retaining ones of the link pinning state entries associated with respective flows in the first subset of flows, the apparatus includes means for performing:
changing the ones of the link pinning state entries associated with respective flows in the first subset of flows from being temporary entries to being permanent entries.

13. The apparatus according to any of claims 1 to 12, wherein, for deactivating ones of the link pinning state entries associated with respective flows in the second subset of flows, the apparatus includes means for performing:
changing the ones of the link pinning state entries associated with respective flows in the second subset of flows from being temporary entries to being deactivated entries.

14. A method, comprising:
creating, for a set of flows mapped to an outgoing link, a respective set of link pinning state entries mapping the respective flows to the outgoing link;
remapping a first subset of flows in the set of flows to at least one other outgoing link while a second subset of flows in the set of flows remain mapped to the outgoing link; and
retaining ones of the link pinning state entries associated with respective flows in the first subset of flows and deactivating ones of the link pinning state entries associated with respective flows in the second subset of flows.

15. Apparatus comprising means for performing:
forwarding packets of a set of flows using a set of outgoing links based on stateless per-flow load balancing;
monitoring, for each outgoing link in the set of outgoing links, a respective bandwidth consumption on the outgoing link;
creating, for each flow in the set of flows mapped to one of the outgoing links experiencing a bandwidth consumption condition, a respective temporary link pinning state entry for the respective flow that maps the respective flow to the one of the outgoing links;
determining, for each flow in the set of flows mapped to the one of the outgoing links based on the respective temporary link pinning state entry for the respective flow, a bandwidth consumption of the respective flow on the one of the outgoing links;
remapping at least one of the link pinning state entries to at least one other outgoing link in the set of outgoing links based on the bandwidth consumptions of the flows on the one of the outgoing links; and
deactivating a portion of the link pinning state entries associated with ones of the flows which remain mapped to the one of the outgoing links.
